# EUROPEAN PATENT APPLICATION

(11) **EP 0 569 987 A1**
(43) Date of publication of application: **18.11.1993**
(21) Application number: 93107813.3
(22) Date of filing: 13.05.1993
(51) Int. Cl.: G06F 11/00

(54) **Microprocessor incorporating cache memory enabling efficient debugging**

(30) Priority: 13.05.1992 JP 119403/92; 22.06.1992 JP 187497/92
(71) Applicant: NEC CORPORATION, Tokyo (JP)
(72) Inventor: Tomohisa, Arai, c/o NEC Corporation, Minato-ku, Tokyo (JP); Yumiko, Horiguchi, c/o NEC Corporation, Minato-ku, Tokyo (JP)
(74) Representative: Betten & Resch

(57) **Abstract**

In a microprocessor incorporating an instruction cache (13), information regarding whether or not a branch instruction is executed and information regarding whether or not a branch is established are output to the exterior. Even when the instruction cache (13) is hit, a trace of instructions can be carried out by using such information.

## Description

### BACKGROUND OF THE INVENTION

### Field of the Invention

The present invention relates to a microprocessor incorporating a cache memory, enabling efficient debugging in the development of systems or programs, and a trace system therefor.

### Description of the Related Art

In the development of systems or programs for a microcomputer, there are three-levels of debugging methods: a trace method, a trap method, and a single-step method.

### (1) Trace Method

Information showing an execution location of a program is collected and assembled to acknowledge the sequence of execution of the program. Otherwise, information regarding access of memory operands is collected and assembled to acknowledge the sequence of access of the memory operands. Such information is generally constructed by an address signal, a data signal, and a status signal which can be observed at external terminals of the microprocessor for a bus cycle.

Thus, since the above-mentioned information can be external to the microprocessor, a trace function can be realized without adding a special function to the microprocessor. Also, since it is unnecessary to generate an interrupt or exception to interrupt the execution of a program to be debugged, or it is unnecessary to wait for a special bus cycle for the execution of a program to be debugged, the timing in a debug state is the same as the timing in a non-debug state.

This trace method is, therefore, a passive method for simply observing the state of a program to be debugged, since a specific state is not detected to interrupt the execution of the program.

### (2) Trap method

When access of an instruction code or a memory operand occurs at a predetermined special location (address), the control is transferred to a debugging program which is called a debugger, thereby carrying out a detailed debugging process.

As is different from the trace method, at only required timings, the control is transferred to the debugger. Therefore, a hardware mechanism, generally called a trap interrupt mechanism, is required to accurately generate an interrupt/exception immediately before or immediately after the execution of an instruction code having a preset address. As a result, the trap method cannot always be realized. Also, it is required to accurately know the sequence of a program. Further, if the control is not trapped by a predetermined trap, for example, if a program has overrun before being trapped by the trap, the execution of the program cannot be interrupted.

### (3) Single-step method

Every time one instruction is carried out, the control is transferred to a debugger, thereby displaying an internal state of the microprocessor such as a state of a general register, a processor status word (PSW), a state of a program counter (PC) and the like, and changing a part of these states, to process the program. Thus, since the internal state of the microprocessor is recognized every time one instruction is carried out, the procedure of the program can be precisely recognized.

Thus, in the single-step method, every time the microprocessor carries out one instruction, the control is transferred to the debugger. Therefore, a hardware mechanism, generally called a single-step interrupt mechanism, is required to generate an interrupt/exception at the timing of the execution of every instruction. As a result, the single-step method cannot always be realized. Further, since the control is transferred to the debugger at the execution of each instruction,
i) the efficiency of execution of the program is low;
ii) it is impossible to debug a timing-critical process such as a time interrupt routine; and
iii) the timings of the internal operation in a debug state is quite different from these in a non-debug state.

As stated above, since the three debugging methods have advantages and disadvantages, use is generally made of a combination of the debugging methods.

For example, firstly, an actual sequence of instructions are recognized by the trace method. Secondly, when the control is in proximity to a location (address) where a problem occurs, the control is transferred by the trap method to the debugger. Finally, the execution state of instructions is followed in detail by the single-step method.

Thus, the trace method is an indispensible for effectively debugging a system or program.

In a microprocessor incorporating a cache memory, when an instruction to be executed is not registered in the cache memory (hereinafter referred to as a "miss-hit"), this miss-hit instruction is fetched from an external memory, so that no problem at all occurs in carrying out the trace method. However, when an instruction to be executed is registered in the cache memory (hereinafter, referred to as a "hit"), information including this hit instruction is not leaked into the exterior of the microprocessor, so that it is impossible to carry out the trace method, which will be later explained in detail.

Note that, in order to completely carry out the trace method, there may be a method where the cache memory is deactivated during a trace mode, thereby observing all of the fetched instructions from the exterior of the microprocessor. In this case, however, since the operation of the microprocessor during a trace mode is different from that during an actual operation mode, accurate debugging is impossible.

### SUMMARY OF THE INVENTION

It is an object of the present invention to provide a microprocessor incorporating a cache memory, which enables an efficient trace method.

Another object of the present invention is to provide a trace system for a microprocessor incorporating a cache memory.

According to the present invention, in a microprocessor incorporating an instruction cache, information regarding whether or not a branch instruction is executed and information regarding whether or not a branch is established are output to the exterior. Therefore, even when the instruction cache (13) is hit, a trace of instructions can be carried out by using such information.

### BRIEF DESCRIPTION OF THE DRAWINGS

The present invention will be more clearly understood from the description as set forth below, compared with the prior art, with reference to the accompanying drawings, wherein:
Fig. 1 is a block circuit diagram illustrating a prior art microprocessor incorporating a cache memory;
Fig. 2 is a block circuit diagram illustrating a prior art trace system for the microprocessor of Fig. 1;
Fig. 3 is a block circuit diagram illustrating a first embodiment of the microprocessor according to the present invention;
Fig. 4 is a detailed block circuit diagram of the instruction cache of Fig. 3;
Fig. 5 is a detailed block circuit diagram of the bus control unit of Fig. 3;
Fig. 6 is a diagram showing an example of instruction code used in the microprocessor of Fig. 3;
Fig. 7 is a block circuit diagram illustrating a trace system for the microprocessor of Fig. 3;
Fig. 8 is a detailed block circuit diagram of the trace analyser of Fig. 7;
Fig. 9 is a flowchart showing the operation of the tracer of Fig. 7;
Fig. 10 is a diagram showing a trace trap process operated in the microprocessor of Fig. 3;
Fig. 11 is a flowchart showing the operation of the tracer of Fig. 7;
Fig. 12 is a block circuit diagram illustrating a second embodiment of the microprocessor according to the present invention;
Fig. 13 is a diagram showing the output of the status encoder of Fig. 12;
Fig. 14 is a detailed block diagram of the trace analyser for the microprocessor of Fig. 12;
Fig. 15 is a block circuit diagram illustrating a third embodiment of the microprocessor according to the present invention;
Fig. 16 is a detailed block circuit diagram of the instruction cache of Fig. 15;
Fig. 17 is a block circuit diagram illustrating a trace system for the microprocessor of Fig. 15;
Fig. 18 is a detailed block circuit diagram of the trace analyser of Fig. 17;
Fig. 19 and 20 are flowcharts showing the operation of the tracer of Fig. 17;
Fig. 21 is a block circuit diagram illustrating a fourth embodiment of the microprocessor according to the present invention;
Fig. 22 is a diagram showing the output of the status encoder of Fig. 21;
Fig. 23 is a detailed block circuit diagram of the trace analyser for the microprocessor of Fig. 21.

### DESCRIPTION OF THE PREFERRED EMBODIMENTS

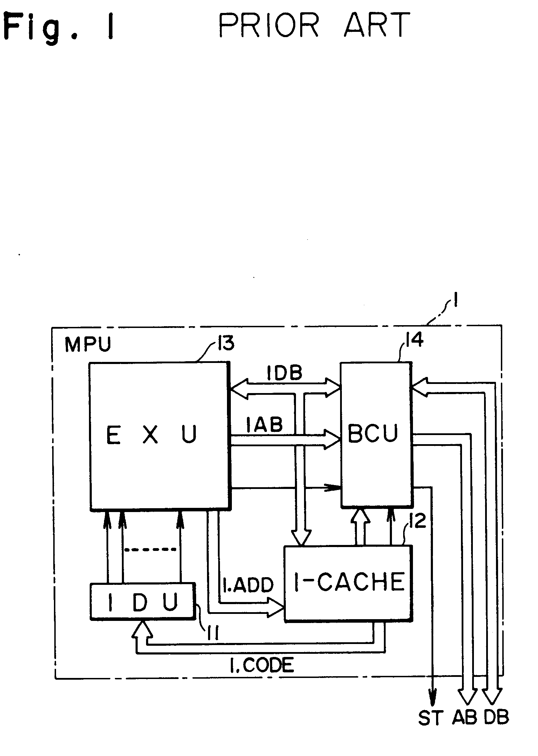

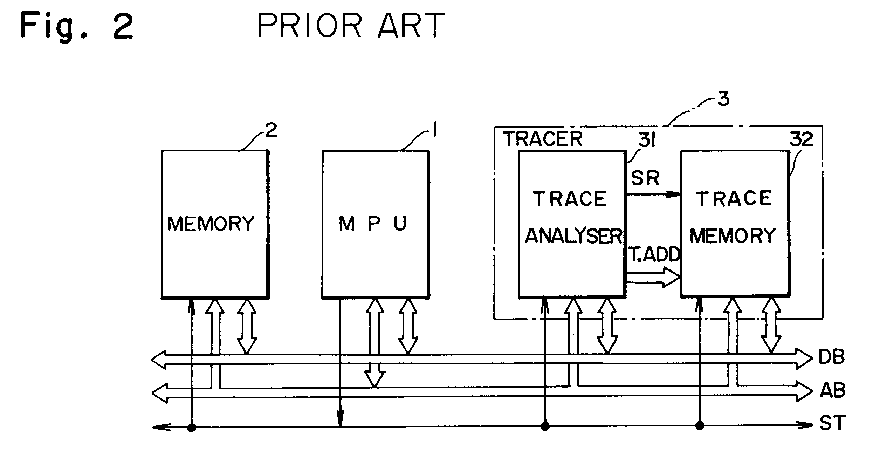

Before the description of embodiments of the present invention, a prior art microprocessor and a trace system therefor will be explained with reference to Figs. 1 and 2.

In Fig. 1, which illustrates a prior art microprocessor, a microprocessor 1 includes an instruction decoder (IDU) 11 for decoding an instruction code from an instruction cache (I-CACHE) 12 to generate various control signals and transmit them to an execution unit (EXU) 13. As a result, the execution unit 13 carries out various processes in accordance with the control signals. Simultaneously, the execution unit 13 generates an address of an instruction to be executed next and transmits it to the instruction cache 12. Otherwise, the execution unit 13 can generate an address of an instruction and transmit it via an internal address bus IAB to a bus control unit (BCU) 14, so that this address is transmitted via an external address bus AB to an external memory which is not shown in Fig. 1, but is indicated by reference numeral 2 in Fig. 2. In this case, the bus control unit 14 generates a status signal indicating an instruction fetch cycle and transmits it to a status signal line ST, and as a result, the external memory 2 is accessed by using the above-mentioned address. Then, an instruction code from the external memory 2 is received by the bus control unit 14 via an external data bus DB, and is written via an internal data bus IDB into the instruction cache 12.

In Fig. 2, which illustrates a prior art trace system for the microprocessor 1 associated with the external memory 2, a trace 3 includes a tracer analyser 31 and a trace memory 32. The trace analyser 31 monitors the status signal line ST so as to detect an instruction fetch cycle. The trace memory 32 receives trace addresses from the trace analyser 31 and forms a trace of instructions therein.

First, the operation of the tracer 3 where the instruction cache 12 is not operated is explained below. That is, when an instruction fetch request occurs in the microprocessor 1, the microprocessor 1 initiates an instruction fetch cycle to generate a status signal indicating such a cycle at the status signal line ST and an address of an instruction to be fetched at the external address bus AB. In this state, when the trace analyser 31 detects such an instruction fetch cycle, the trace analyser 31 generates a strobe signal SR and transmits it to the trace memory 32, so that addresses on the external address bus AB generated for the instruction fetch cycle are written into the trace memory 32. Thus, all of the addresses of instructions executed by the microprocessor 1 are recorded in the trace memory 32, thereby forming a trace of instructions.

Next, the operation of the tracer 3 where the instruction cache 12 is operated is explained.

Also in this case, the execution unit 13 generates an address of an instruction and transmits it to the instruction cache 12. When the above-mentioned instruction is not registered in the instruction cache 12 (i.e., "miss-hit"), the instruction cache 12 requests a fetch of this miss-hit instruction to the bus control unit 14. Then, the bus control unit 14 generates a status signal for initiating a replace cycle at the status signal line ST and simultaneously, generates the address of the miss-hit instruction at the external address bus AB. As a result, a code of the miss-hit instruction is read out of the external memory 2 and is registered in the instruction cache 12. Also, the miss-hit instruction code is supplied from the instruction cache 12 to the instruction decoder 11. Also in this case, since the trace analyser 31 detects an instruction fetch cycle at the status signal line ST, a trace of instructions can be formed in the trace memory 32, thereby carrying out a trace method.

Conversely, when the above-mentioned instruction is registered in the instruction cache 12 (i.e., "hit"), the instruction cache 12 immediately transmits a code of the hit instruction to the instruction decoder 11. Therefore, in this case, since the microprocessor 1 does not generate any external signals, the tracer 3 cannot carry out a trace method.

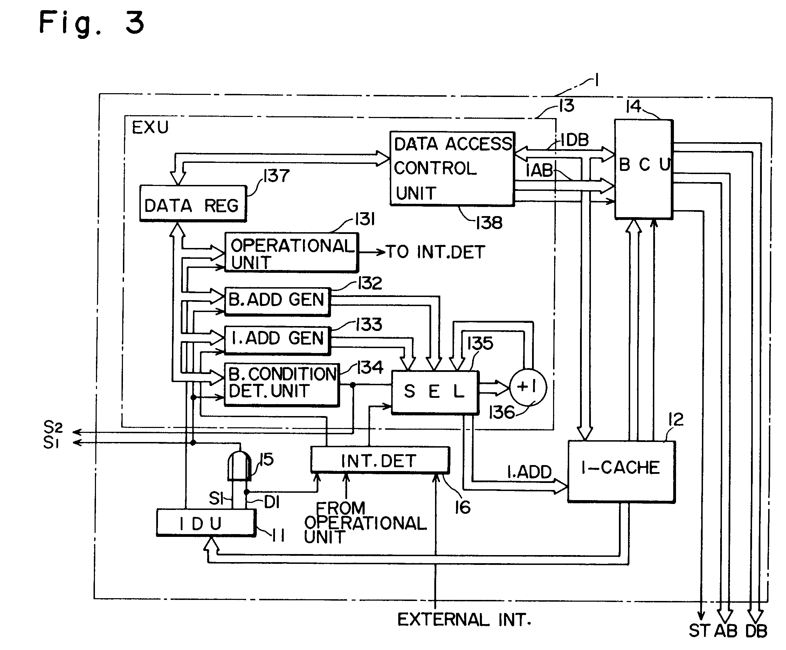

In Fig. 3, which illustrates a first embodiment of the microprocessor according to the present invention, reference numeral 15 designates an OR circuit for detecting a static branch instruction SI and a dynamic branch instruction DI. Note that, if a static branch instruction SI is executed to establish a branch, the control is transferred to its branched destination which is, in this case, determined in advance. On the other hand, if a dynamic branch instruction DI is executed to establish a branch, the control is also transferred to its branched destination which, however, cannot be statically calculated or determined in advance. An example of a dynamic branch instruction is a register indirect branch instruction. Thus, the OR circuit 15 generates a detection signal S₁ for detecting a branch instruction to be executed, and transmits it directly to the exterior of the microprocessor 1.

Also, reference numeral 16 designates an interrupt detection unit for detecting a dynamic branch instruction, an internal interrupt from the execution unit 13 and an external interrupt.

The execution unit 13 includes an operational unit 131 for generating an internal interrupt, a branch address generator 132 for generating a branched destination (address), an interrupt address generator 133 for generating an interrupt address, and a branch condition determining unit 134 for determining whether or not a branch is established as a result of execution of a branch instruction. That is, when a branch is established, a selector 135 selects a branched address and transmits it as an instruction address to the instruction cache 12. Also, when an interrupt occurs, the selector 135 selects an interrupt address and transmits it as an instruction address to the instruction cache 12. Conversely, when a branch is not established and no interrupt occurs, the selector 135 selects the output of a +1 incrementor 136 and transmits it to the instruction cache 12. The +1 incrementor 136 increments the output of the selector 135 by +1, thereby enabling a sequential access.

Also, the branch condition determining unit 134 generates a branch establishment/non-establishment signal S₂ for determining whether or not a branch is established as a result of execution of a branch instruction, and transmits it directly to the exterior of the microprocessor 1.

Further, the execution unit 13 includes a data register 137 connected to the operational unit 131, the branch address generator 132, the interrupt address generator 133 and the branch condition determining unit 134, and a data access control unit 138 connected between the data register 137 and the bus control unit 14.

Further, if the interrupt detection unit 16 detects a dynamic branch instruction, a trace trap process is initiated. For example, first, the content of the program counter (PC) and the program status word (PSW) (not shown) are retired. Next, since the interrupt detection unit 16 generates an interrupt and transmits it to the interrupt address generator 133, and simultaneously, the selector 135 selects the output of the interrupt address generator 133, thereby fetching a trace trap program, in this case, a trace for this fetch access is not carried out. Then, the instruction cache 12 is flushed, i.e., cleared out. Finally, the dynamic branch instruction is again executed. In this case, when the branch condition determining unit 134 determines that a brach is established, the banched destination (address) of the branched address generator 132 is selected by the selector 135, so that the control jumps to the branched address. In this case, since the instruction cache 12 is notvalid, and accordingly, the instruction cache 12 is always miss-hit, a trace of this branched address is carried out.

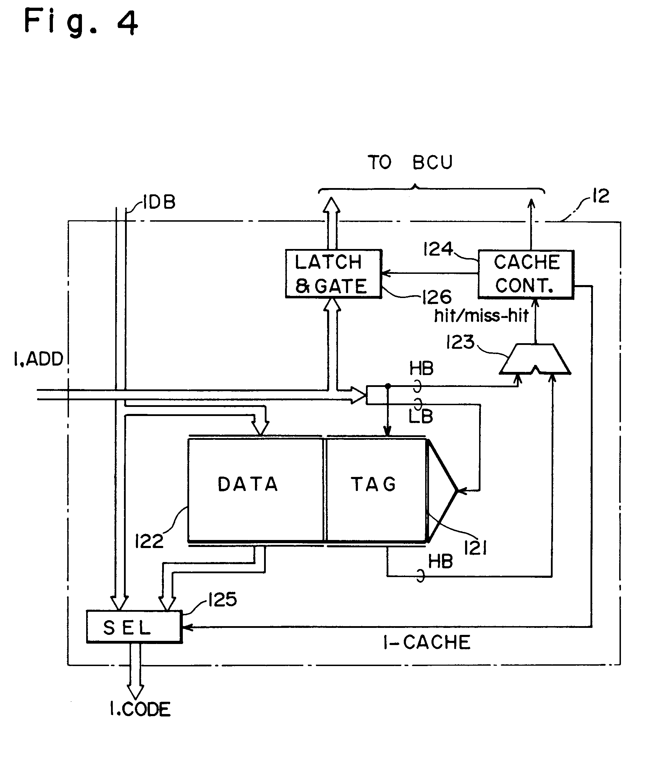

In Fig. 4, which is a detailed block circuit diagram of the instruction cache 12 of Fig. 3, the instruction cache 12 includes a tag portion 121 and a data portion 122 which are simultaneously accessed by lower bits LB of an instruction address supplied from the execution unit 13. In this case, the tag portion 121 stores higher bits HB of instruction addresses, while the data portion 122 stores instruction codes each of which is indicated by an instruction address combined by lower bits LB of an instruction address from the execution unit 13 and higher bits HB stored in the tag portion 121. In this case, higher bits HB of an instruction address from the execution unit 13 do not always coincide with higher bits HB of the tag portion 121. Therefore, when higher bits HB of an instruction address from the execution unit 13 coincide with higher bits HB of the tag portion 121 accessed by the lower bits LB of the instruction address from the execution unit 13, it can be said that the instruction cache 12 is "hit". Conversely, when higher bits HB of an instruction address from the execution unit 13 do not coincide with higher bits HB of the tag portion 121 accessed by the lower bits LB of the instruction address from the execution unit 13, it can be said that the instruction cache 12 is "miss-hit".

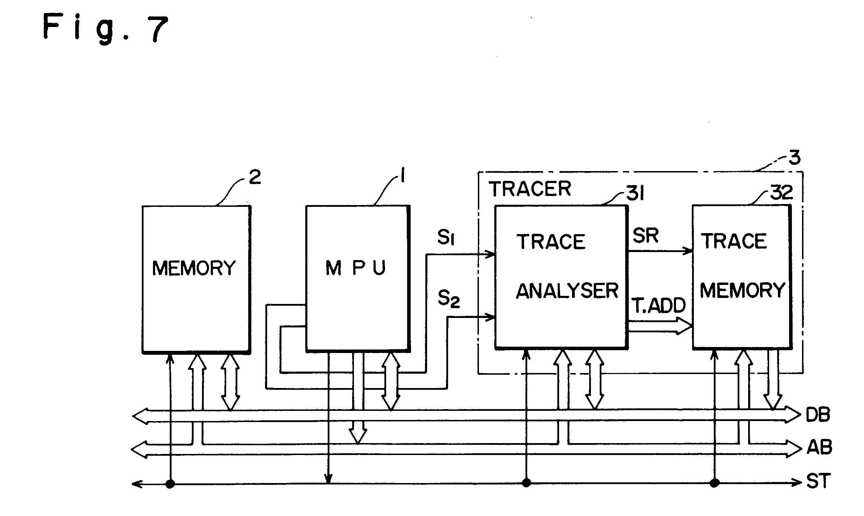

In order to determine whether the instruction cache 12 is hit or miss-hit, a comparator 123 is provided for comparing the higher bits HB from the execution unit 13 with those from the tag portion 121. The hit/miss-hit signal of the comparator 123 is supplied to a cache control unit 124. When the instruction cache 12 is hit, the cache control unit 124 generates a control signal and transmits it to a selector 125, and therefore, the selector 125 selects the output of the data portion 122. As a result, an instruction code is supplied from the data portion 122 to the instruction decoder 11. Conversely, when the instruction cache 12 is miss-hit, the cache control unit 124 generates an instruction access request and transmits it to the bus control unit 14, and simultaneously, the cache control unit 124 controls a latch and gate circuit 126 to pass the instruction address from the execution unit 13 to the bus control unit 14. Therefore, the bus control unit 14 initiates a replace bus cycle to fetch an instruction code from the external memory 2 (see Fig.7), and as a result, this fetched instruction code is written into the data portion 122. Simultaneously, the cache control unit 124 controls the selector 125 to select the internal data bus IDB, thereby passing the instruction code therethrough to the instruction decoder 11.

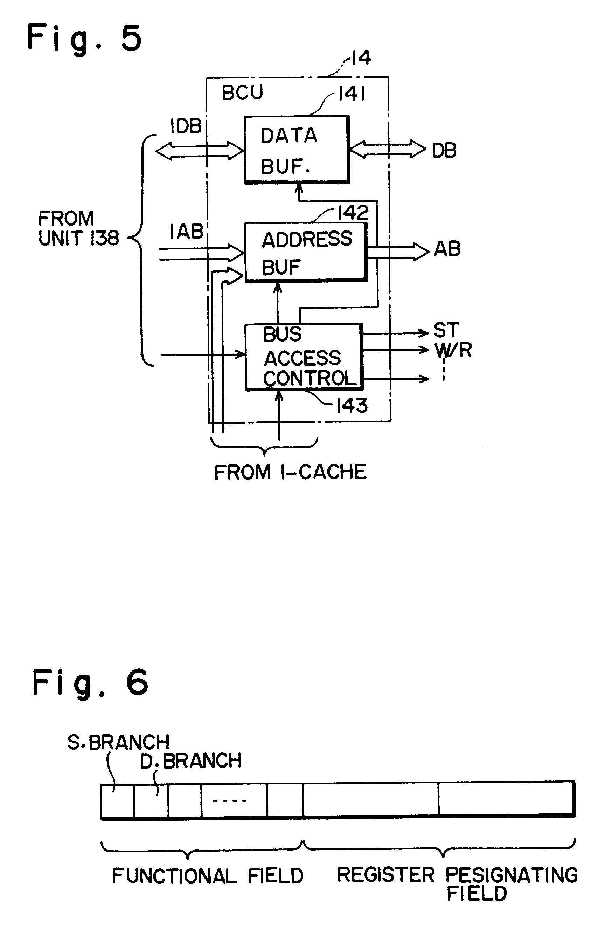

In Fig. 5, which is a detailed block circuit diagram of the bus control unit 14 of Fig. 3, the bus control unit 14 includes a data buffer 141 interposed between the internal data bus IDB and the external data bus DB and an address buffer 142 interposed between the internal address bus IAB and the external address bus AB. The address buffer 142 also receives the instruction address from the instruction cache 12. Both of the buffers 141 and 142 are controlled by a bus access control unit 143 which receives a control signal from the data access control unit 138 of the execution unit 13 and a control signal from the instruction cache 12. Also, the bus access control unit 143 generates a status (ST) signal, a write/read (W/R) signal and the like.

In Fig. 6, which shows an example of the instruction code used in Fig. 3, the instruction code is formed by a functional field and a register designating field. Also, the functional field is formed by a static branch bit, a dynamic branch bit and the like.

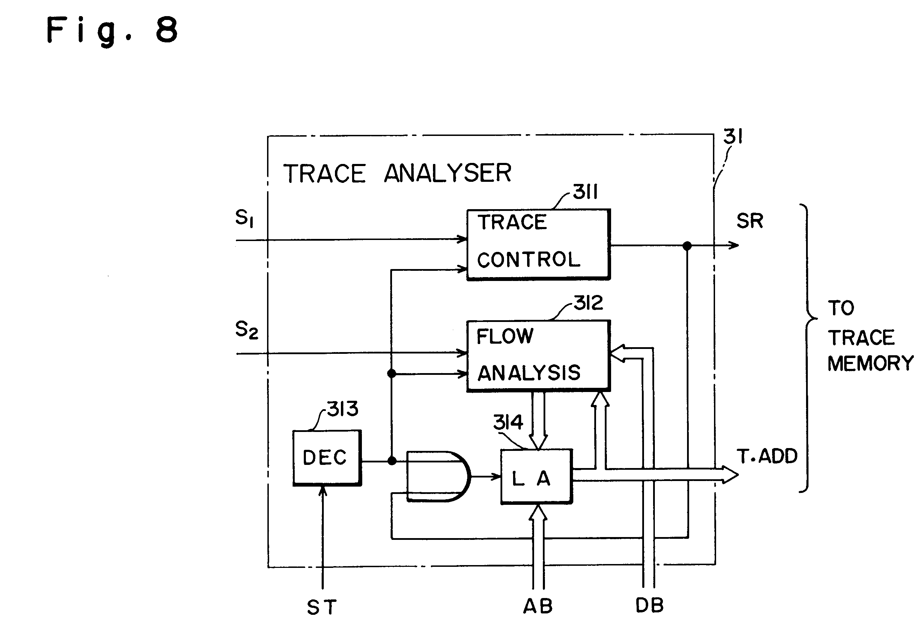

Next, a trace system for the microprocessor 1 of Fig. 3 will be explained with reference to Figs. 7 and 8.

As illustrated in Fig. 7, the trace analyser 31 receives a detection signal S₁ and a branch establishment/non-establishment signal S₂ from the microprocessor 1, which is different from Fig. 2. As a result, the trace analyser 31 is constructed as illustrated in Fig. 8.

In Fig. 8, a trace control unit 311 receives a detection signal S₁ from the microprocessor 1 and a control signal from a status decoder 313 to generate a strobe signal SR indicating the initiation of a trace. to generate a strobe signal SR. For example, when a status signal at the status signal line ST indicates a bus cycle for an instruction access, the status decoder 313 generates such a control signal.

Also, in Fig. 8, a flow analysis unit 312 receives a branch establishment/non-establishment signal S₂ from the microprocessor 1. The flow analysis unit 312 stores therein analysed flow data such as a first address of a block in advance of the execution of a program. Also, the flow analysis unit 312 generates an address of a new block by using the branch establishment/non-establishment signal S₂ and the address of a latch circuit 314, and transmits it as a trace address to the trace memory 32. Simultaneously, the content of the latch circuit 314 is renewed by the flow analysis unit 312.

Here, note that a "block" means a group of instructions which can be sequentially executed. In other words, no branching and no confluence occurs within one block.

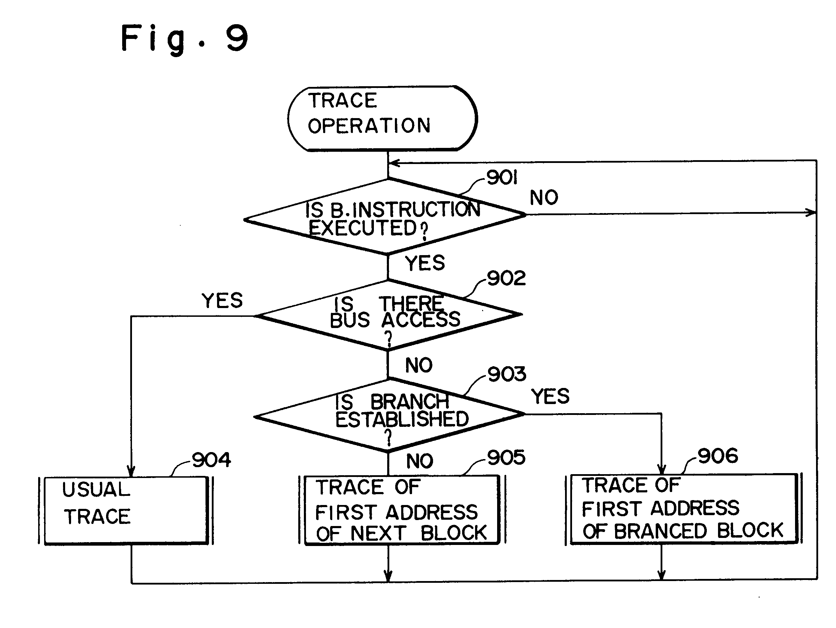

The operation of a combination of the trace control unit 311 and the flow analysis unit 312 will be clearly understood from Figs. 9, 10 and 11.

In Fig. 9, it is assumed that a branch instruction includes only a static branch instruction where a branched destination (address) can be calculated or determined in advance.

Referring to Fig. 9, at step 901, it is determined whether or not a branch instruction is executed in accordance with the detection signal S₁. Only if a branch instruction is executed, does the control proceed to step 902. Otherwise, the control returns to step 901.

At step 902, it is determined whether or not there is a bus access cycle such as an instruction access and a cache replace cycle in accordance with the output of the status decoder 313. As a result, when there is a bus access cycle, the control proceeds to step 904 which carries out a usual trace. That is, an instruction address is read out of the external address bus AB and is transmitted as a trace address to the trace memory 32. In this case, the trace control unit 31 generates a strobe signal SR and, simultaneously, operates the latch circuit 314. Otherwise, the control proceeds to step 903.

At step 903, it is determined whether or not a branch is established in accordance with the branch establishment/non-establishment signal S₂. If a branch is not established, the control proceeds to step 905, while if a branch is established, the control proceeds to step 906.

At step 905, a trace of a first address of the next block is executed. That is, as stated above, since the flow analysis unit 312 analyses the flow of instructions can be calculated or determined in advance, the flow analysis unit 312 recognizes a first address of each block in advance. Therefore, in this case, when the flow analysis unit 312 receives the signal S₂ indicating that a branch is not established, the flow analysis unit 312 generates a first address of the next block and transmits it as a trace address via the latch circuit 314 to the trace memory 32.

At step 906, a trace of a first address of a branched block is executed. That is, when the flow analysis unit 312 receives the signal S₂ indicating that a branch is established, the flow analysis unit 312 generates a first address of a branched block which includes a branched destination (address) and transmits it as a trace address to the trace memory 32.

The control at step 904, 905 or 906 returns to step 901.

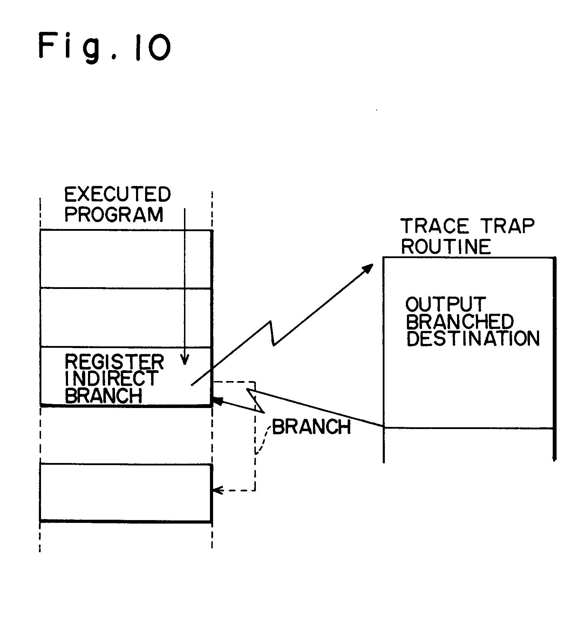

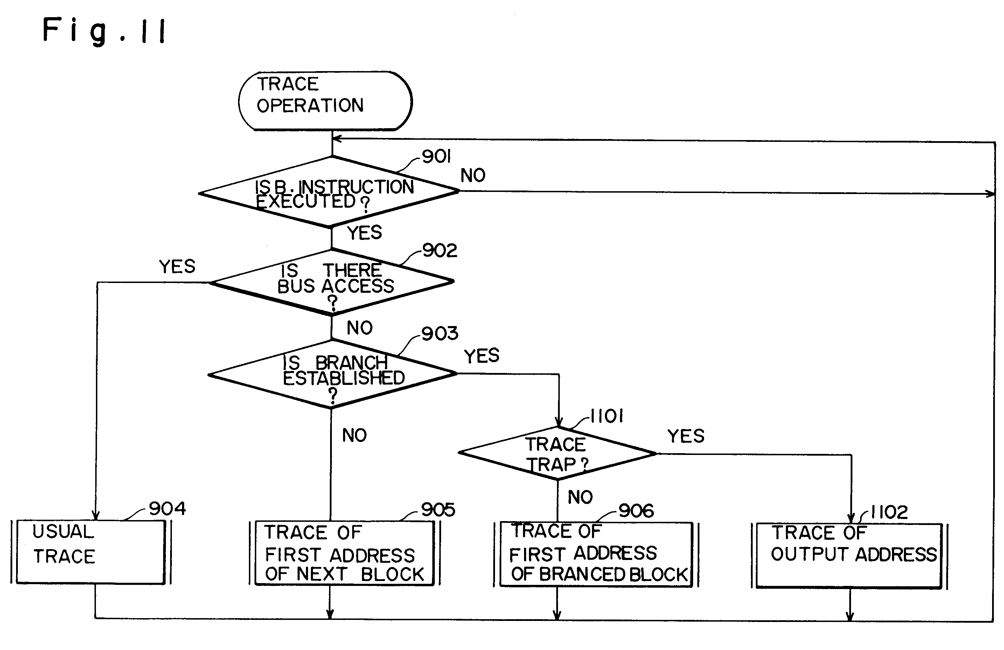

Next, it is assumed that a branch instruction also includes a dynamic branch instruction where a branched destination (address) cannot be calculated or determined in advance. In this case, in the microprocessor 1 of Fig. 3, when a dynamic branch instruction such as a register indirect instruction is executed, the control jumps to a trace trap routine (process) as shown in Fig. 10, to output a branched destination (address) to the external address bus AB. Therefore, the trace analysis unit 312 of the tracer 31 analyses the branched destination and stores it therein. In this case, the combination of the trace control unit 311 and the flow analysis unit 312 operates as shown in the flowchart of Fig. 11.

In Fig. 11, steps 1101 and 1102 are added to Fig. 9. That is, when it is determined at step 903 that a branch is established, the control proceeds to step 1101 which determines whether or not a trace trap process is carried out in the microprocessor 1 in accordance with the output of the status decoder 313. When it is determined that a trace trap process is not carried out, the control proceeds to step 906 which carries out a trace of a first address of the next block. Conversely, when it is determined that a trace trap process is carried out, the control proceeds to step 1102.

At step 1102, the flow analysis unit 312 generates the branched destination (address) which is already stored during the trace trap process, and transmits it as a trace address via the latch circuit 314 to the trace memory 32.

In Fig. 11, note that after it is determined at step 903 that a branch is established, it is possible to first carry out a trace of a first address of a branched block, and then to replace it with a trace of an address output by a trace trap process upon detection of execution there of.

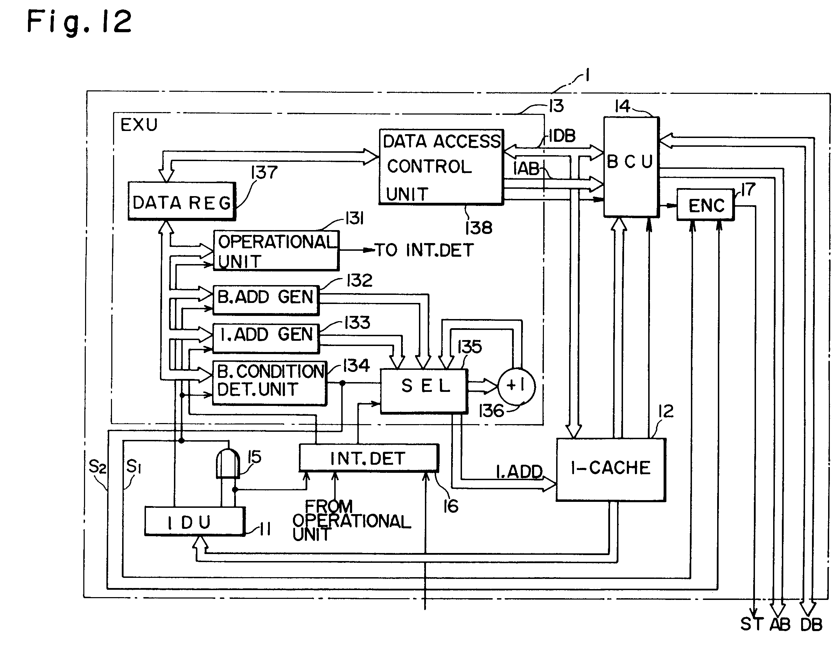

In Fig. 12, which illustrates a second embodiment of the microprocessor according to the present invention, a status encoder 17 is added to the elements of Fig. 3. The status encoder 17 is used for supplying the detection signal S₁ and the branch establishment/non-establishment signal S₂ to the status signal line ST. As a result, if a tracer is constructed for the microprocessor 1 of Fig. 12, no special connections are required between the microprocessor 1 and the tracer 3. Therefore, a trace system can be constructed by a configuration similar to that illustrated in Fig. 2.

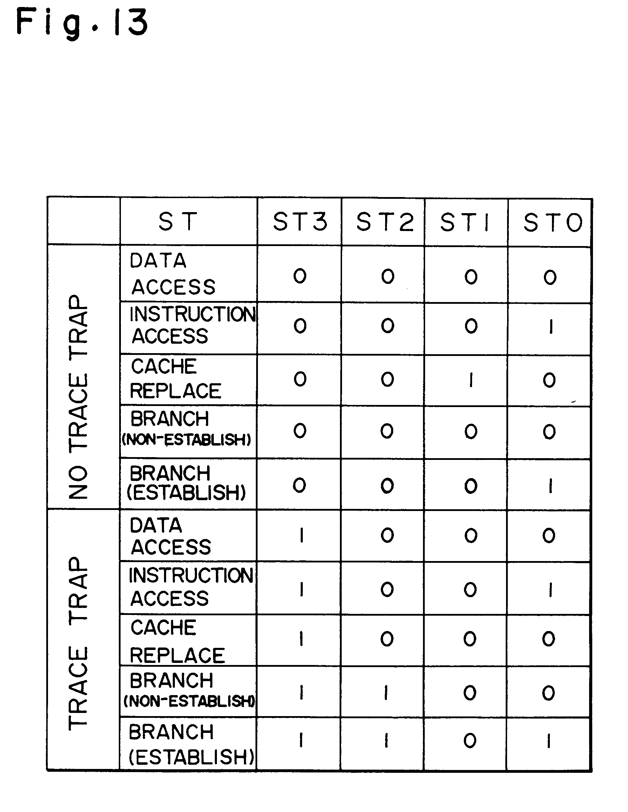

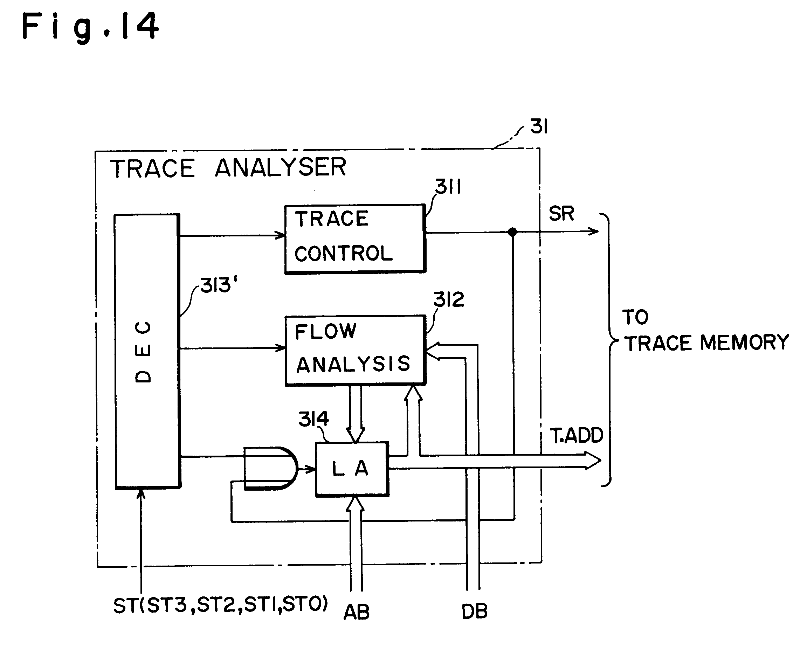

The status encoder 17 can be constructed by a logic gate circuit to generate four bits ST3, ST2, ST1 and ST0 as shown in Fig. 13. Also, the trace analyser 31 can be constructed by a circuit as illustrated in Fig. 14. That is, in Fig. 14, a status decoder 313' decodes the four status bits ST3, ST2, ST1 and ST0 to generate decoded signals and transmits them to the trace control unit 311, the flow analysis unit 312, and the latch circuit 314. In this case, the combination of the trace control unit 311 and the flow analysis unit 312 of Fig. 14 operates in the same way as those of Fig. 8, i.e., as shown in Figs. 9 and 11.

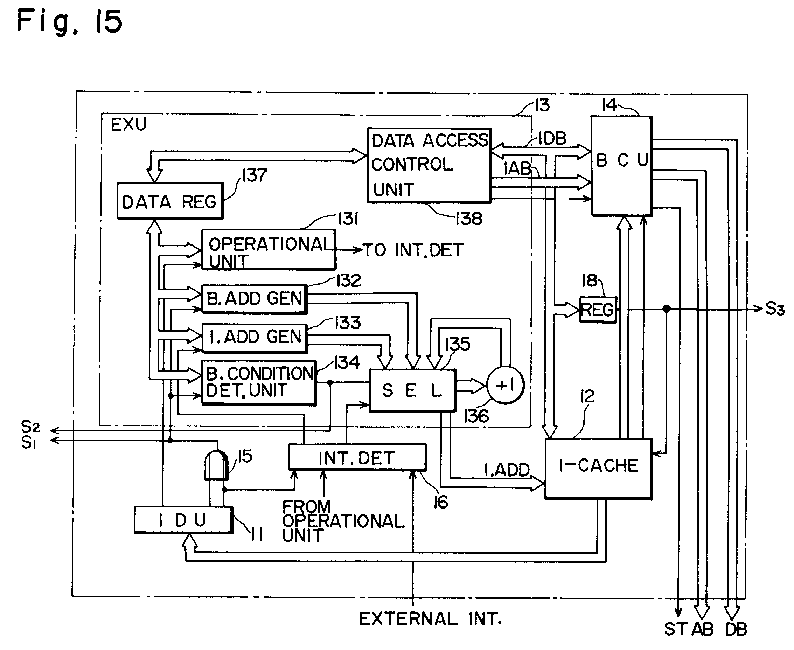

In Fig. 15, which illustrates a third embodiment of the microprocessor according to the present invention, a cache control register 18 is added to the elements of Fig. 3. The cache control register 18 is connected to the internal data bus IDB, thereby determining whether or not to activate the instruction cache 12. That is, the cache control register 18 generates a cache ON and OFF signal S₃ which is transmitted to the exterior and simultaneously, to the instruction cache 12.

When the cache control register 18 generates a cache ON signal S₃ for activating the instruction cache 12, the instruction cache 12 is activated. In this case, when the instruction cache 12 is hit, the instruction cache 12 generates an instruction code and transmits it to the instruction decoder 11. Conversely, when the instruction cache 12 is miss-hit, the instruction cache 12 generates a fetch request with a miss-hit instruction address and transmits it to the bus control unit 14.

On the other hand, when the cache control register 18 generates a cache OFF signal S₃ for deactivating the instruction cache 12, the instruction cache 12 is deactivated. In this case, even when the instruction cache 12 is hit, the instruction cache 12 generates a fetch request with a hit instruction address and transmits it to the bus control unit 14.

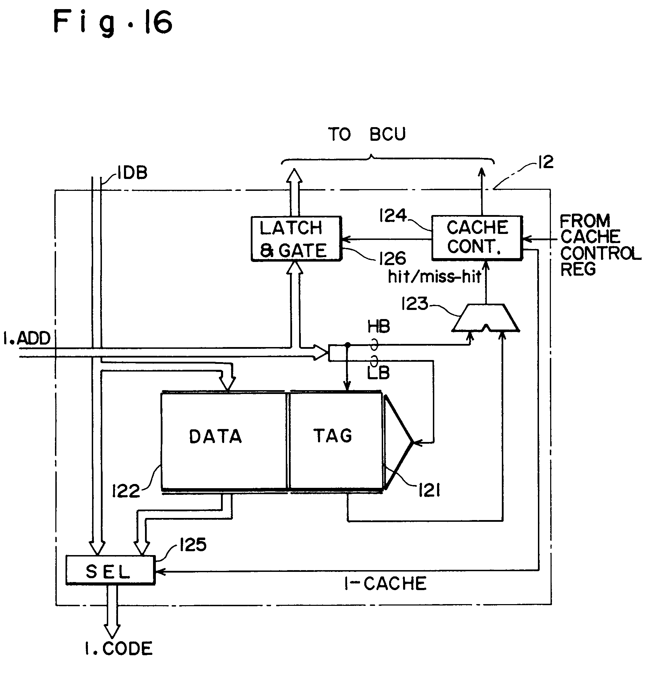

In Fig. 16, which is a detailed block circuit diagram of the instruction cache 12 of Fig. 15, a cache ON and OFF signal S₃ of the cache control register 18 is supplied to the cache control unit 124. When the cache control register 18 generates a cache ON signal S₃ for activating the instruction cache 12, the cache control unit 124 operates in the same way as in Fig. 4. Conversely, when the cache control register 18 generates a cache OFF signal S₃ for deactivating the instruction cache 12, the cache control unit 124 generates a fetch request with an instruction address from the latch circuit 126, in spite of the hit/miss-hit output of the comparator 123. Also, in this case, the cache control unit 124 operates the selector 125 so as to select the internal data bus IDB.

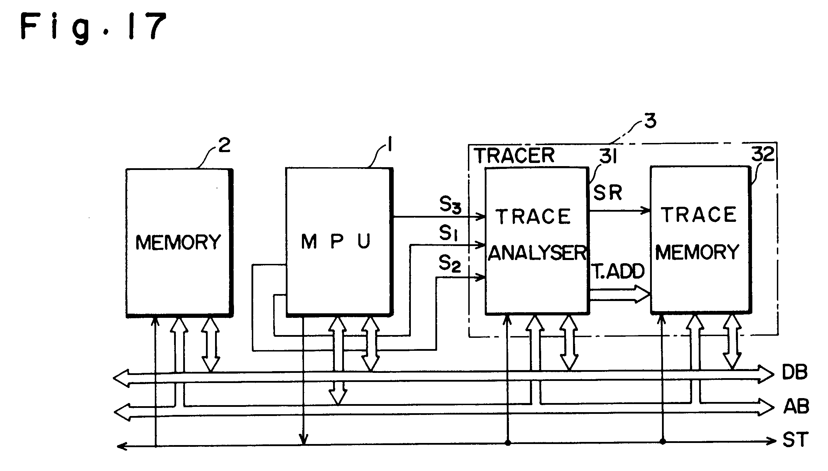

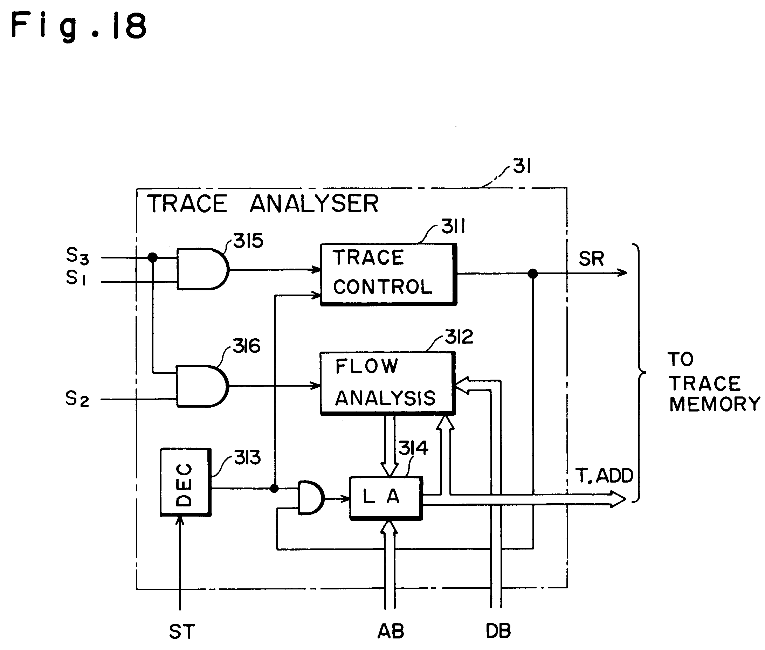

In Fig. 17, which illustrates a trace system for the microprocessor 1 of Fig. 15, the cache ON and OFF signal S₃ of the microprocessor 1 is supplied to the trace analyser 31, which is different from Fig. 6. As a result, the trace analyser 31 further includes two AND circuits 315 and 316 as illustrated in Fig. 18. That is, when the cache ON and OFF signal S₃ indicates "1" (cache ON state), the AND circuits 315 and 316 are enabled to pass the two signals S₁ and S₂ therethrough, so that the trace analyser 31 operates in the same way as in Fig. 8. Conversely, when the cache ON and OFF signal S₃ indicates "0" (cache OFF state), the AND circuits 315 and 316 are disabled, and the combination of the trace control unit 311 and the flow analysis unit 312 carries out a conventional trace. Because, in this case, the microprocessor 1 of Fig. 15 serves as a microprocessor without a cache, and therefore, all of the instruction accesses are output to the exterior of the microprocessor 1.

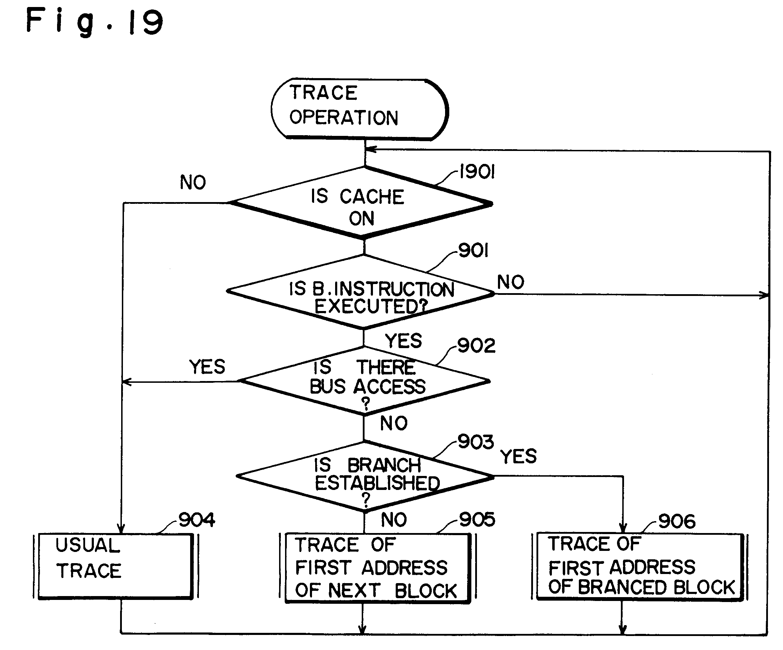

Assume that a branch instruction includes only a static branch instruction, then the combination of the trace control unit 311, the flow analysis unit 312 and the AND circuits 315 and 316 of Fig. 18 is operated as shown in Fig. 19. In Fig. 19, a step 1901 is added to Fig. 9. That is, at step 1901, it is determined whether the instruction cache 12 is activated (ON) in accordance with the cache ON and OFF signal S₃. As a result, when the instruction cache 12 is deactivated (OFF), the control proceeds to step 904 which carries out a usual trace. Conversely, when the instruction cache 12 is activated (ON), the control proceeds to step 901 and therefore, the same operation as in Fig. 9 is carried out.

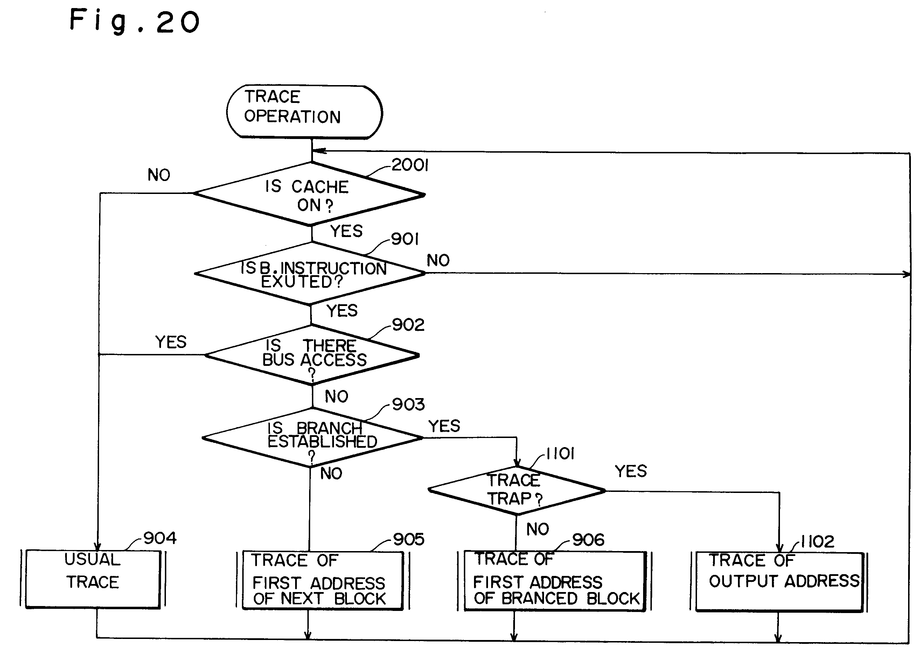

Also, assuming that a branch instruction includes a static branch instruction and a dynamic branch instruction, then the combination of the trace control unit 311, the flow analysis unit 312 and the AND circuits 315 and 316 of Fig. 18 is operated as shown in Fig. 20. In Fig. 20, a step 2001 is added to Fig. 11. That is, at step 2001, it is determined whether the instruction cache 12 is activated (ON) in accordance with the cache ON and OFF signal S₃. As a result, when the instruction cache 12 is deactivated (OFF), the control proceeds to step 904 which carries out a usual trace. Conversely, when the instruction cache 12 is activated (ON), the control proceeds to step 901 and therefore, the same operation as in Fig. 11 is carried out.

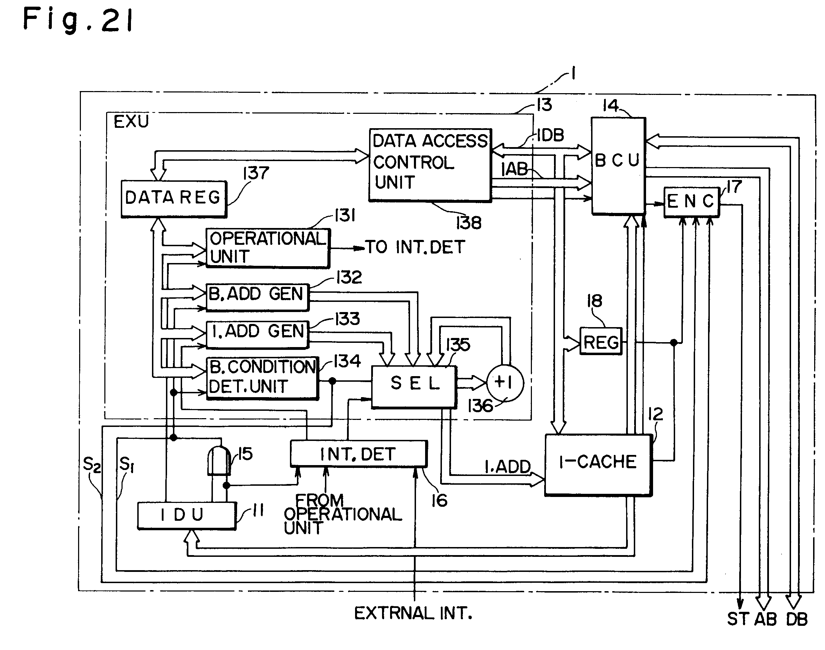

In Fig. 21, which illustrates a fourth embodiment of the microprocessor according to the present invention, a status encoder 17' is added to the elements of Fig. 15. The status encoder 17' is used for supplying the detection signal S₁, the branch establishment/non-establishment signal S₂ and the cache ON and OFF signal S₃ to the status signal line ST. As a result, if a tracer is constructed for the microprocessor 1 of Fig. 15, no special connections are required between the microprocessor 1 and the tracer 3. Therefore, a trace system can be constructed by the similar configuration as illustrated in Fig. 2.

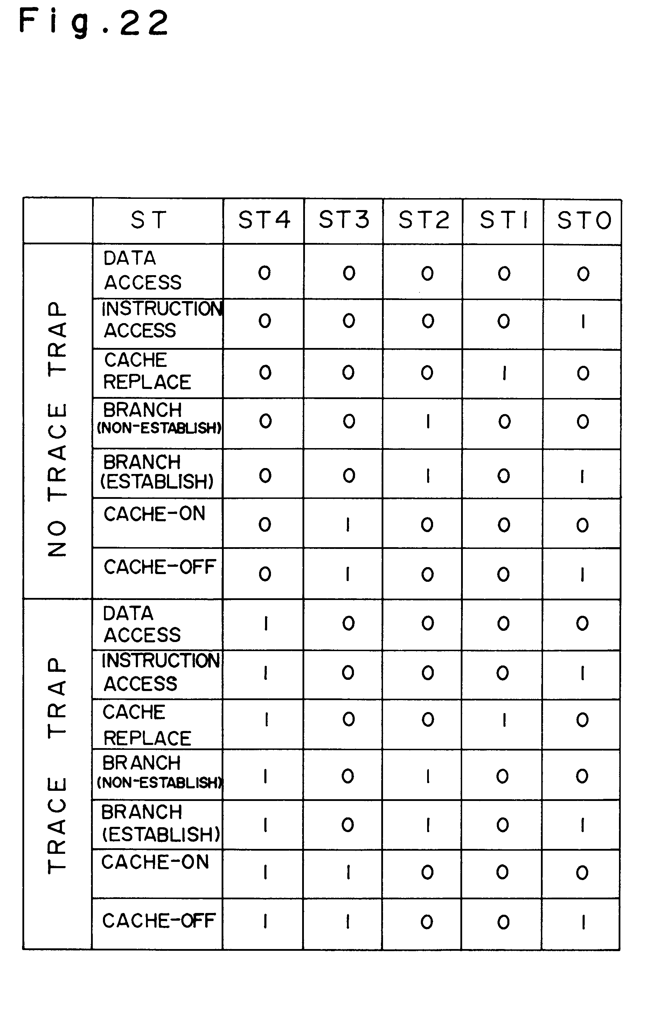

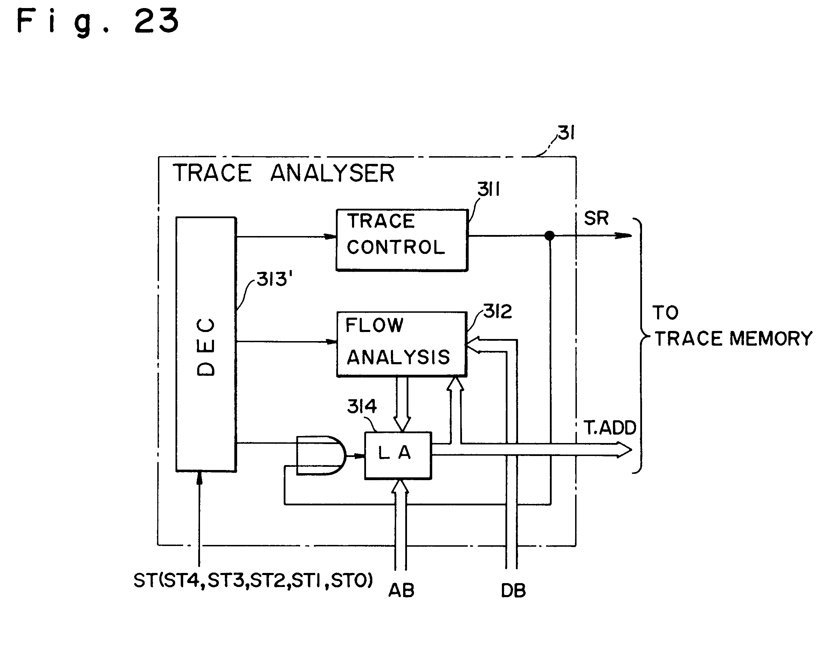

The status encoder 17' can be constructed by a logic gate circuit to generate five bits ST4, ST3, ST2, ST1 and ST0 as shown in Fig. 22. Also, the trace analyser 31 can be constructed by a circuit as illustrated in Fig. 23. That is, in Fig. 23, the status decoder 313' decodes the five status bits ST4, ST3, ST2, ST1 and ST0 to generate decoded signals and transmits them to the trace control unit 311, the flow analysis unit 312, and the latch circuit 314. In this case, the combination of the trace control unit 311 and the flow analysis unit 312 of Fig. 23 operates in the same way as those of Fig. 16, i.e., as shown in Figs. 19 and 20.

Although a dynamic branch instruction exemplifies a register indirect branch instruction in the above-mentioned embodiments, the present invention can be applied to an exception processing program executed by an exception handling routine.

Further, in Figs. 9, 11, 19 and 20, a trace of a first address of a block is executed, however, other representative notations for a block, such as a number of a block can be traced, since such a number also helps to analysis the flow of instructions.

As explained hereinbefore, according to the present invention, since information regarding whether or not a branch instruction is executed and information regarding whether or not a branch is established are output to the exterior of a microprocessor incorporating an instruction cache, even when the instruction cache is hit, a trace of instructions can be carried out by using such information, thus enabling an efficient debugging.

## Claims

1. A microprocessor incorporating an instruction cache (12), comprising:
means for detecting a branch instruction to be executed;
means for informing to the exterior whether or not said branch instruction is detected;
means for determining whether or not a branch is established by executing said branch instruction; and
means for informing to the exterior whether or not said branch is established.

2. A microcomputer as set forth in claim 1, wherein said informing means use external status signal terminals of said microprocessor.

3. A microprocessor as set forth in claim 1, further comprising:
means for determining whether or not said branch instruction is a dynamic branch instruction where a branched destination cannot be statically determined in advance;
means for generating an interrupt when said dynamic branch instruction is detected; and
means for carrying out a trace trap process for calculating and outputting said branched destination to the exterior, when said interrupt is generated.

4. A microprocessor as forth in claim 1, further comprising:
means for determining whether said instruction cache is activated or deactivated; and
means for informing to the exterior whether said instruction cache is activated or deactivated.

5. A microprocessor as set forth in claim 4, wherein said informing means use external status signal terminals of said microprocessor.

6. A microprocessor comprising:
an execution unit (13) for generating an instruction address;
an instruction cache (12), connected to said excution unit, for receiving the instruction address to generate an instruction code corresponding to the instruction address when the instruction address is registered in said instruction cache and to generate a replacement fetch request to the exterior when the instruction address is not registered in said instruction cache;
an instruction decoder (11), connected to said instruction cache and said execution unit, for decoding the instruction code from said instruction cache to generate control signals including a branch instruction and transmit them to said execution unit;
means, connected to said instruction decoder, for outputting the generation of the branch instruction to the exterior; and
means, connected to said execution unit, for outputting the establishment of a branch to the exterior when said execution unit carries out the branch instruction to establish the branch.

7. A microprocessor as set forth in claim 6, further comprising a bus control unit (14), connected to said execution unit and to said instruction cache, for outputting a status signal indicating the state of said microprocessor to the exterior, said outputting means using status signal terminals of said microprocessor.

8. A microprocessor as set forth in claim 6, further comprising means for generating an interrupt when the branch instruction is a dynamic branch instruction where a branched destination cannot be statically determined in advance,
said execution unit comprising means for receiving the interrupt to carry out a trace trap process for outputting the branched destination to the exterior.

9. A microprocessor as set forth in claim 7, further comprising a cache control register (18), connected to said execution unit and to said instruction cache, for activating/deactivating said instruction cache and outputting an cache ON and OFF signal to the exterior in accordance with the activation and deactivation of said instruction cache.

10. A trace system for a microprocessor (1) incorporating an instruction cache (13), said microprocessor outputting therefrom a detection signal (S₁) for indicating whether or not a branch instruction to be executed is detected, a branch establishment/non-establishment signal (S₂) for indicating whether or not a branch is established when the branch instruction is executed, and an access signal associated with an instruction address for requesting an access to an external memory (2), said system comprising:
means for receiving the detection signal to determine whether or not a branch instruction is executed;
means for receiving the branch establishment/non-establishment signal to determine whether or not a branch is established;
means for receiving the access signal to determine whether or not an access is performed upon said external memory;
means for performing a trace upon the output instruction address, when a branch instruction is executed and an access is performed upon said external memory;
means for performing a trace upon a next block, when a branch instruction is executed, a branch is not established, and an access is not performed upon said external memory; and
means for performing a trace upon a branched block, when a branch instruction is executed, a branch is established, and an access is not performed upon said external memory.

11. A trace system for a microprocessor (1) incorporating an instruction cache (13), said microprocessor outputting therefrom a detection signal (S₁) for indicating whether or not a branch instruction to be executed is detected, a branch establishment/non-establishment signal for indicating whether or not a branch is established when the branch instruction is executed, and an access signal associated with an instruction address for requesting an access to an external memory (2), said microprocessor carrying out a trace trap process for outputting a branched destination address to the exterior when the branch instruction is a dynamic branch instruction where the branched destination cannot be statically determined, said system comprising:
means for receiving the detection signal to determine whether or not a branch instruction is executed;
means for receiving the branch establishment/non-establishment signal to determine whether or not a branch is established;
means for receiving the access signal to determine whether or not an access is performed upon said external memory;
means for performing a trace upon the output instruction address, when a branch instruction is executed and an access is performed upon said external memory;
means for performing a trace upon a next block, when a branch instruction is executed, a branch is not established, and an access is not performed upon said external memory;
means for performing a trace upon a branched block, when a branch instruction is executed, a branch is established, an access is not performed upon said external memory, and a trace trap process is not carried out; and
means for performing a trace upon the output branched destination address by the trace trap process, when a branch instruction is executed, a branch is established, an access is not performed upon said external memory, and a trace trap process is carried out.

12. A trace system for a microprocessor (1) incorporating an instruction cache (13), said microprocessor outputting therefrom a detection signal (S₁) for indicating whether or not a branch instruction to be executed is detected, a branch establishment/non-establishment signal (S₂) for indicating whether or not a branch is established when the branch instruction is executed, an access signal associated with an instruction address for requesting an access to an external memory (2), and a cache ON and OFF signal (S₃) for activating and deactivating said instruction cache, said system comprising:
means for receiving the detection signal to determine whether or not a branch instruction is executed;
means for receiving the branch establishment/non-establishment signal to determine whether or not a branch is established;
means for receiving the access signal to determine whether or not an access is performed upon said external memory;
means for receiving the cache ON and OFF signal to determine whether said instruction cache is activated or deactivated;
means for performing a trace upon the output instruction address, when said instruction cache is deactivated, or when a branch instruction is executed and an access is performed upon said external memory;
means for performing a trace upon a next block, when said instruction cache is activated, a branch instruction is executed, a branch is not established, and an access is not performed upon said external memory; and
means for performing a trace upon a branched block, when said instruction cache is activated, a branch instruction is executed, a branch is established, and an access is not performed upon said external memory.

13. A trace system for a microprocessor (1) incorporating an instruction cache (13), said microprocessor outputting therefrom a detection signal (S₁) for indicating whether or not a branch instruction to be executed is detected, a branch establishment/non-establishment signal (S₂) for indicating whether or not a branch is established, when the branch instruction is executed, and an access signal associated with an instruction address for requesting an access to an external memory (2), and a cache ON and OFF signal (S₃) for activating and deactivating said instruction cache, said microprocessor carrying out a trace trap process for outputting a branched destination address to the exterior when the branch instruction is a dynamic branch instruction where the branched destination cannot be statically determined, said system comprising:
means for receiving the detection signal to determine whether or not a branch instruction is executed;
means for receiving the branch establishment/non-establishment signal to determine whether or not a branch is established;
means for receiving the access signal to determine whether or not an access is performed upon said external memory;
means for receiving the cache ON and OFF signal to determine whether said instruction cache is activated or deactivated;
means for performing a trace upon the output instruction address, when said instruction cache is deactivated, or when a branch instruction is executed and an access is performed upon said external memory;
means for performing a trace upon a next block, when said instruction cache is activated, a branch instruction is executed, a branch is not established and an access is not performed upon said external memory; and
means for performing a trace upon a branched block, when said instruction cache is activated, a branch instruction is executed, a branch is established an access is not performed upon said external memory, and a trace trap process is not carried out;
means for performing a trace upon the output branched destination address by the trace trap process, when said instruction cache is activated, a branch instruction is executed, a branch is established, an access is not performed upon said external memory, and a trace trap process is carried out.
